# FASCICULE DE BREVET EUROPEEN

(11) **EP 0 726 133 B1**
(45) Date de publication et mention de la délivrance du brevet: **14.01.1998**
(21) Numéro de dépôt: 96400263.8
(22) Date de dépôt: 07.02.1996
(51) Int. Cl.: B29C 47/04, B29C 47/20, B29C 49/00

(54) **Procédé d'obtention d'un récipient comportant des bandes décoratives, machine de coextrusion pour la mise en oeuvre du procédé et récipient obtenu par ce procédé**
Verfahren zur Herstellung eines Behälters mit dekorativen Bändern, Coextrusionsvorrichtung zum Ausführen des Verfahrens und nach diesem Verfahren hergestellter Behälter
Method of obtaining a receptacle with decorative stripes, coextrusion apparatus for carrying out this method and receptacle obtained by this method

(30) Priorité: 07.02.1995 FR 9501394
(43) Date de publication de la demande: 14.08.1996
(73) Titulaire: L'OREAL, 75008 Paris (FR)
(72) Inventeur: De Laforcade, Vincent, F-92140 Clamart (FR)
(74) Mandataire: Lhoste, Catherine

(56) Documents cités:
- EP-A- 0 158 919
- EP-A- 0 575 049
- EP-A- 0 618 059
- EP-A- 0 662 385
- US-A- 3 257 482
- US-A- 3 343 568
- PATENT ABSTRACTS OF JAPAN vol. 17, no. 664 (M-1523), 8 Décembre 1993 & JP-A-05 220739 (JAPAN STEEL WORKS), 31 Août 1993,

## Description

La présente invention se rapporte à un procédé de fabrication d'un récipient destiné à contenir un produit liquide, pâteux ou solide comportant un corps constitué de deux matières thermoplastiques coextrudées de caractéristiques différentes, dont l'une au moins forme une bande décorative. Ce récipient se présente sous la forme de flacon, de pot, ou de bouteille, la bande constituant, en particulier, une décoration en couleur en vue de conférer à ce récipient un aspect esthétique. L'invention est relative, également, à une machine de coextrusion utilisable pour la mise en oeuvre du procédé, ainsi qu'à un récipient obtenu par ce procédé.

Ce récipient présentant un bel aspect esthétique, est destiné, plus particulièrement, à contenir un produit de qualité supérieure, par exemple un produit cosmétique, notamment un produit de luxe, ou un produit pharmaceutique.

A présent on sait réaliser, par coextrusion-soufflage, des flacons bimatières de deux couleurs différentes, dont le corps est pourvu de bandes colorés. Ainsi, le document US-A-3 343 568 décrit un flacon comportant des bandes colorées s'étendant selon la direction de l'axe de soufflage du récipient. En variante, ce document décrit un flacon comportant des bandes formant chacune une spirale, l'angle formé entre l'axe de soufflage et les bandes étant au plus de 30°. Ce flacon à bandes en spirale est obtenu à partir d'une paraison coextrudée de deux matériaux différents, les bandes de la paraison étant orientées parallèlement à son axe de symétrie. Avant le soufflage de cette paraison dans un moule, une torsion autour de l'axe de symétrie est exercée, ce qui provoque la formation de spires colorées.

Cette façon de réaliser une spirale décorative sur un flacon présente deux inconvénients majeurs : tout d'abord, la torsion de la paraison ne peut pas excéder une valeur angulaire critique, c'est-à-dire que l'angle formé entre l'axe de soufflage et les bandes ne peut pas dépasser la valeur de 30°, sans risque d'affaiblissement local des parois après le soufflage, notamment au niveau du goulot. Pour remédier à cet inconvénient, il est nécessaire d'augmenter l'épaisseur des parois, ce qui entraîne une augmentation du coût de fabrication et donc du prix de revient du récipient, limitant son utilisation à des produits coûteux, de faible distribution commerciale.

De plus, par suite de la torsion de la paraison, la géométrie des bandes, notamment leur parallélisme, est perturbée, de sorte qu'après soufflage, un récipient peu esthétique est obtenu, mal accepté par le consommateur.

Par ailleurs, on sait réaliser, également par coextrusion-soufflage, des flacons bimatières, présentant des bandes ou zones de deux matières de dureté différente, ces bandes étant orientées, de même, suivant un plan passant par l'axe de soufflage du flacon.

Ainsi, selon le document EP-A-0 385 942, on connaît des flacons ou tubes coextrudés dans lequel les bandes ou zones, orientées suivant un plan passant par l'axe de soufflage du flacon, sont en matière rigide. De même, le document GB-A-2 191 145 décrit un récipient coextrudé, dont une des matières forme une bande longitudinale, discontinue ou discontinue, parallèle à l'axe de soufflage du récipient.

En outre, par le document US-A-3 257 482, on connaît un récipient en forme de gobelet ayant un axe longitudinal, réalisé en une première matière plastique, ce gobelet comprenant des bandes longitudinales en une seconde matière plastique. Ces bandes sont situées dans un plan qui contient l'axe longitudinal du gobelet.

La présente invention a pour objet un procédé d'obtention de nouveaux récipients décorés, notamment de bandes colorées régulièrement espacées, présentant, en particulier, un meilleur effet optique que les récipients de l'art antérieur, de coût plus faible que ceux de l'art antérieur. En outre, ce procédé permet la réalisation de toute forme et orientation de bandes décoratives, contrairement aux procédés de l'art antérieur.

A cet effet, l'invention se rapporte à un procédé de fabrication d'un récipient coextrudé en au moins une première et seconde matières thermoplastiques ayant des caractéristiques différentes, consistant :
- à utiliser une machine à coextruder équipée d'au moins deux chargeurs à vis et d'une tête de coextrusion ayant une sortie primaire et au moins une sortie secondaire, pour coextruder à chaud une paraison creuse formée dans une chambre de coextrusion cylindrique creuse munie d'un axe longitudinal ayant une extrémité annulaire ouverte, destinée à la sortie de la paraison de la tête d'extrusion, la sortie primaire alimentant en la première matière le côté de la chambre de coextrusion opposé à l'extrémité annulaire ouverte, et la sortie secondaire alimentant en la seconde matière la chambre de coextrusion à un niveau situé entre l'extrémité annulaire ouverte de la chambre de coextrusion et son côté, et selon une direction angulaire par rapport à l'axe de la chambre,
- à faire subir à la sortie secondaire, pendant au moins une partie de la coextrusion de la paraison, une translation et/ou une rotation par rapport à la sortie primaire, tout en modulant l'ouverture et/ou la fermeture de l'une des deux sorties, de sorte à former sur la paraison au moins une bande en l'une des première et/ou seconde matières,
- à transférer la paraison, encore chaude, dans un moule, et,
- à souffler la paraison pour obtenir la forme finale du récipient pourvu d'au moins une bande constituée de l'une des deux matières.

L'invention se rapporte aussi à une machine à coextruder équipée d'au moins deux chargeurs à vis pour le chargement en au moins une première et seconde matières thermoplastiques, munie d'une tête de coextrusion, comportant une sortie primaire, au moins une sortie secondaire et une chambre de coextrusion cylindrique creuse munie d'un axe longitudinal ayant une extrémité annulaire ouverte, la sortie primaire alimentant en la première matière le côté de la chambre de coextrusion opposé à l'extrémité annulaire ouverte, et la sortie secondaire alimentant en la seconde matière la chambre de coextrusion à un niveau situé entre l'extrémité annulaire ouverte de la chambre de coextrusion et son côté, et selon une direction angulaire par rapport à l'axe de la chambre, caractérisée en ce que la tête de coextrusion comporte une tête secondaire mobile munie de la sortie secondaire, apte à faire exécuter à la sortie secondaire une translation et/ou une rotation par rapport à la sortie primaire.

Selon un premier mode de réalisation, la sortie secondaire peut être annulaire. On obtient ainsi, en ouvrant et fermant la sortie secondaire à volonté, un flacon comportant au moins une bande orientée perpendiculairement à l'axe de soufflage. La largeur de la bande dépend, dans ce cas, de la durée d'ouverture de la sortie secondaire.

Selon un second mode de réalisation, la sortie secondaire peut être réduite à un ou plusieurs secteurs angulaires décalés. Chaque secteur constitue un orifice de sortie secondaire pouvant être alimenté en la même seconde matière, ou bien alimenté en plusieurs secondes matières de nature différente. En ouvrant la sortie secondaire et en effectuant en même temps un mouvement de rotation de cette sortie secondaire, on obtient un récipient comportant une ou plusieurs bandes en forme de spirale. Le nombre de bandes est fonction du nombre de secteurs. Selon l'invention, la tête de coextrusion comporte autant de sorties (primaire + secondaire) que de matières, pouvant comporter un ou plusieurs orifices de sortie.

Lorsque plusieurs secteurs sont prévus, ils peuvent être alimentés chacun par une matière différente ; il est ainsi possible de réaliser plusieurs bandes de nature différente, selon la matière employée.

Lorsqu'on ouvre et ferme à volonté la sortie secondaire pendant la coextrusion, on obtient un flacon comportant une ou plusieurs bandes en forme de spirale discontinues. La longueur des fragments des bandes et de leurs interstices dépend de la durée d'ouverture ou de fermeture respectivement des secteurs de la sortie secondaire.

Avantageusement, un moyen est prévu pour régler les vitesses de translation et de rotation de la tête secondaire. Ce moyen peut être, par exemple, un ou plusieurs moteurs électriques pas-à-pas, dont la rotation des axes moteurs est, d'une part, transmise à la tête d'extrusion secondaire par des moyens de transmission connus, et d'autre part dont l'angle et la vitesse de rotation sont régulés par un automate programmable qui permet d'ajuster très finement la longueur, la largeur et l'esthétique de la bande.

En particulier, en modulant la vitesse et le sens de rotation de la tête secondaire, il est possible, de réaliser cette bande de sorte qu'elle suit une ligne ondulée, orientée parallèle à l'axe de soufflage du récipient, ou bien en spirale ondulée.

Avantageusement, les sorties primaire et/ou secondaires sont munies d'un dispositif d'ouverture et/ou de fermeture à volonté. En cas de présence de plusieurs orifices de sortie secondaire, leur ouverture et/ou fermeture peut être effectuée indépendamment.

Le procédé et la tête de coextrusion décrits ci-dessus permettent l'obtention d'un récipient ayant des bandes décoratives formant un angle non nul avec l'axe de soufflage, qui est généralement l'axe longitudinal du récipient.

Aussi, l'invention a encore pour objet un récipient obtenu par coextrusion-soufflage ayant un axe de soufflage longitudinal orienté selon une première direction, comprenant un corps muni d'un fond fermé et d'un goulot, constitué de deux matières thermoplastiques coextrudées de caractéristiques différentes, comprenant au moins une bande formée par au moins une des deux matières. Selon un premier mode de réalisation de l'invention, ce récipient se caractérise en ce que cette bande est située dans un plan formant avec l'axe de soufflage un angle supérieur à 30°.

Selon un second mode de réalisation, le récipient se caractérise en ce que la bande est constituée d'au moins deux segments d'orientation différente. En particulier, cette bande peut présenter, sur une partie au moins, une ondulation, un escalier ou des créneaux.

Avantageusement, la première matière a une couleur différente de la couleur de la deuxième matière. En outre, la première ou la deuxième matière peut être transparente ou opaque.

Selon une première possibilité, la bande peut être continue. Selon une seconde possibilité, cette bande est discontinue. Il est en outre possible, de réaliser plusieurs bandes équidistantes ou non sur le corps du flacon.

Selon encore une autre possibilité, la ou les bandes peuvent avoir la forme d'une spirale, continue ou non, les bandes étant équidistantes.

Selon une forme particulière de réalisation, la ou les bandes peuvent avoir une orientation suivant une direction perpendiculaire à l'axe de soufflage qui est généralement l'axe du récipient.

Avantageusement, la ou les bandes sont réalisées en matériau bicouche, le corps du récipient étant réalisé en une première matière et la ou les bandes étant réalisées en une deuxième matière superposée sur la première et visible de l'extérieur.

Pour mieux faire comprendre la présente invention, on va en décrire maintenant, à titre d'exemples purement illustratifs et nullement limitatifs, plusieurs modes de réalisation de récipients conformes à l'invention, en référence aux dessins annexés, ainsi que l'outillage nécessaire pour leur réalisation.
La figure 1 représente une vue de face d'un premier mode de réalisation d'un récipient R₁ conforme à l'invention, comportant une bande de couleur, ayant l'orientation de la flèche B ;
les figures 2 à 13 représentent, d'autres modes de réalisations possibles de récipients R₂ à R₁₃ à bandes, conformes à l'invention, la flèche B indiquant, de façon générale, l'orientation des bandes ;
les figures 14 et 15 représentent, en vue schématique, deux modes de réalisation d'une tête d'extrusion équipant l'outillage servant à réaliser les récipients conformes aux figures 1 à 13.

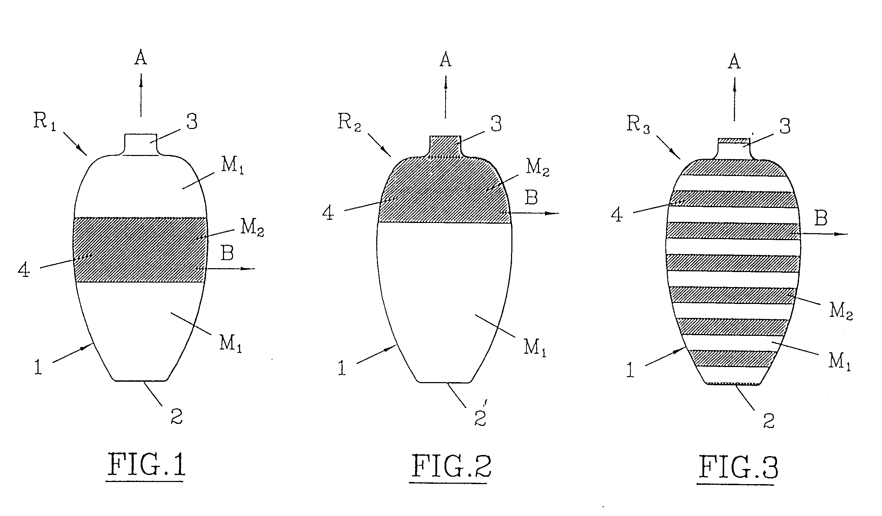

En se référant à la figure 1, on voit un récipient R₁ en forme de flacon 1 ayant un corps de révolution autour d'un axe A, comportant un fond 2, et du côté opposé au fond, un goulot 3. Ce goulot a un diamètre inférieur au diamètre du corps du flacon. Ce flacon 1 est réalisé en une première matière M₁. En outre, il comporte une bande d'étendue périphérique 4, orientée suivant la direction B orthogonale à l'axe A et réalisée en une seconde matière M₂ ayant un aspect différent de celui de la première matière M₁ (mat/brillant, couleur différente, transparent/opaque, doux/granuleux).

Généralement, les première et seconde matières M₁ et M₂ sont choisies parmi les couples de matériaux thermoplastiques qui sont physico-chimiquement compatibles entre eux, c'est-à-dire qui sont aptes à créer une liaison entre eux, par thermofusion, lors de leur coextrusion. Avantageusement, on choisit ces matériaux dans une même famille de matériaux thermoplastiques, mais de couleur différente, un de ces matériaux pouvant être incolore.

Ces matériaux peuvent être choisis parmi les polyéthylènes haute et basse densité, les polypropylènes, les polystyrènes, les polychlorures de vinyle, les résines acryliques, les éthylène vinyl acétates, les polycarbonates, les polyuréthanes, les polyamides, etc. En particulier, la première matière M₁ du flacon peut être du polypropylène blanc, et la seconde matière M₂ du polypropylène teinté en bleu.

La fabrication de ce récipient sera décrite plus loin, lors de la description d'une tête d'extrusion de l'outillage conforme à l'invention.

La figure 2 montre un récipient de révolution R₂, dont toute la partie supérieure constitue un bande 4, réalisée en une matière M₂ et présentant un aspect différent du reste du flacon 1. Cette bande a encore une étendue périphérique et est orientée selon la direction B, orthogonale à l'axe de rotation A du flacon. Cet axe est aussi l'axe de soufflage du flacon.

La figure 3 montre un récipient R₃, muni de bandes annulaires 4 orthogonales à l'axe A, de même largeur et régulièrement espacées suivant l'axe A du récipient.

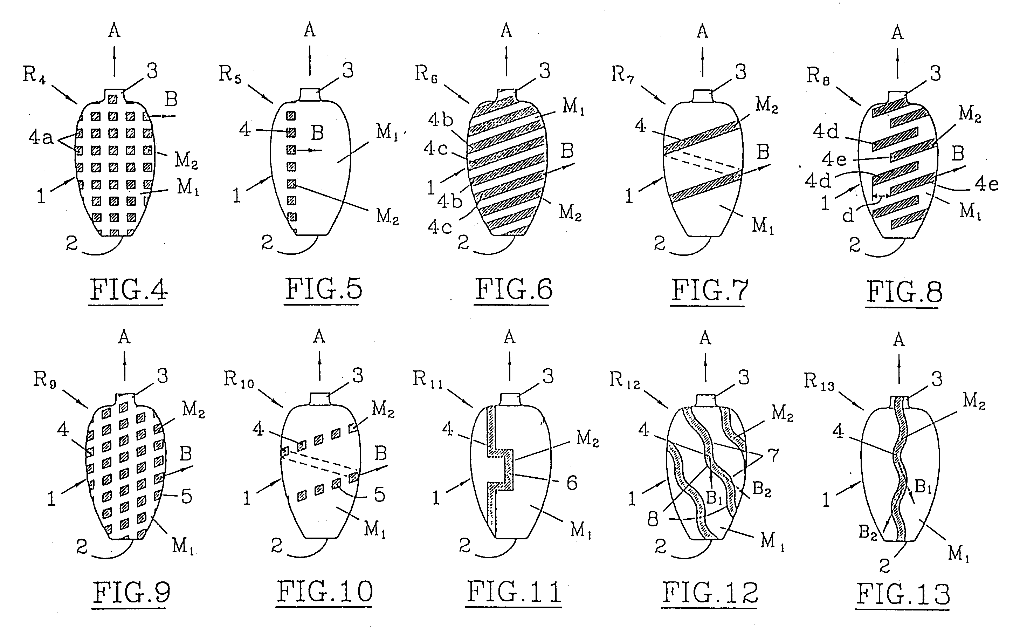

La figure 4 montre un récipient R₄, muni de bandes annulaires discontinues 4, orthogonales à l'axe A, les fragments des bandes 4 étant régulièrement espacés suivant l'axe A du récipient, l'espacement des fragments dans le sens de l'orientation B, étant le même que celui de l'axe A. On obtient ainsi des carrés 4a régulièrement répartis sur l'ensemble du flacon.

La figure 5 montre un récipient R₅, muni de bandes annulaires discontinues 4, orthogonales à l'axe A, régulièrement espacées suivant l'axe A du récipient. Ces bandes se présentent uniquement selon la forme d'une rangée de rectangles, parallèle à l'axe A.

La figure 6 montre un récipient R₆, muni de deux bandes 4b, 4c formant chacune une spirale continue sur le corps du récipient R₆. Les bandes 4b et 4c sont parallèles entre elles et forment un angle d'environ 60° par rapport à l'axe A. Les bandes 4b sont situées dans un plan qui forme un angle d'environ 65° avec l'axe A du récipient.

La figure 7 montre un récipient R₇, muni d'une seule bande 4 formant une spirale continue simple sur le corps du récipient R₆. Cette bande est orientée selon la direction B formant un angle d'environ 60° par rapport à l'axe A.

La figure 8 montre un récipient R₈, muni de deux bandes 4d, 4e formant une spirale à double entrée sur le corps du récipient R₆, la spirale étant discontinue, les fragments 4d, 4e de bande étant décalés d'une distance d, par rapport à un plan passant par l'axe A du récipient. En outre, ces bandes forment un angle d'environ 60° par rapport à l'axe A.

La figure 9 montre un récipient R₉, muni, comme sur la figure 6, de deux bandes 4 en spirale discontinue, les fragments 5 de bande, en forme de losanges, étant alignés parallèles à l'axe A. L'espace entre les fragments 5 de bande dans la direction d'orientation B, ainsi que l'espace entre les bandes dans la direction défini par l'axe A du récipient R_{9,} sont équidistants.

La figure 10 correspond à une réalisation de récipient R₁₀, semblable à la réalisation du récipient de la figure 7, la bande unique 4 étant discontinue, formée par des fragments 5, en forme de losanges.

La figure 11 montre un récipient R₁₁ muni d'une bande 4, d'orientation générale parallèle à l'axe A, formant un créneau rectangulaire. Il est possible, bien entendu, de réaliser toute une série de créneaux. En variante (non représentée), il est possible de réaliser cette bande en forme d'escalier.

La figure 12 montre un récipient R₁₂ muni de trois bandes 4, chacune en spirale hélicoïdale ondulée. Ces bandes 4 sont parallèles entre elles. Elles comportent des segments 7, 8 d'orientation respective B1 et B2, formant un angle obtus par rapport à l'axe A.

La figure 13 montre un récipient R₁₃ muni d'une bande 4 ondulée d'orientation générale parallèle à l'axe A du récipient. Elle comporte des segments 7 et 8 d'orientation analogue à ceux de la figure 12.

Les récipients conformes aux figures 1 à 13 qui viennent d'être décrits, sont obtenus par soufflage d'une paraison coextrudée en deux matériaux différents.

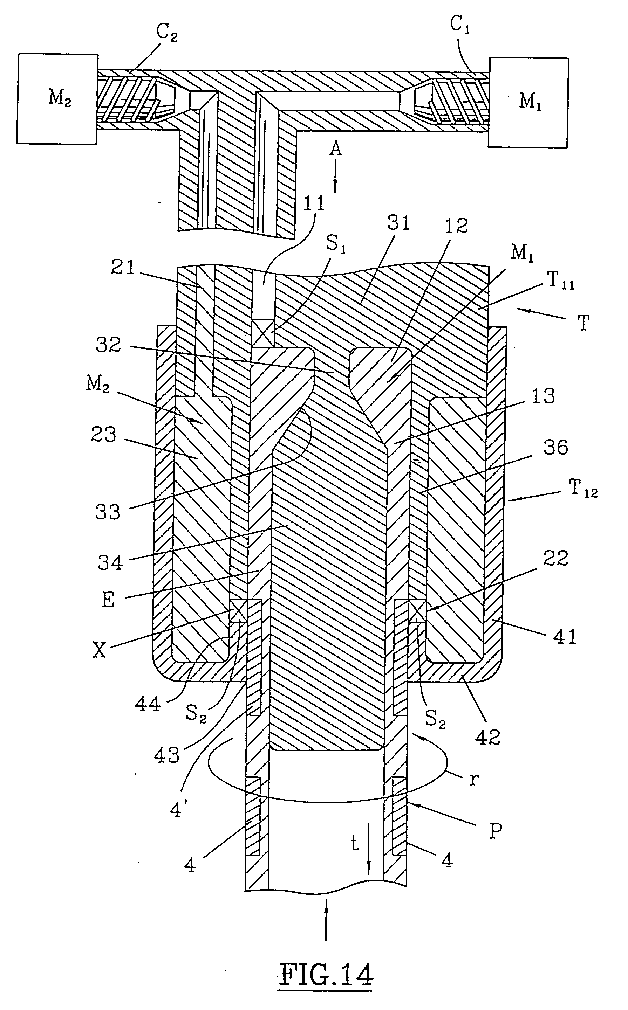

La figure 14 montre, en vue partielle, une tête de coextrusion T équipant une machine d'extrusion-soufflage. Cette machine est munie d'au moins deux chargeurs à vis C₁ et C₂ pour l'alimentation de la tête d'extrusion T en deux matières thermoplastiques M₁ et M₂, ayant des aspects différents. La matière M₁ est acheminée vers la tête de coextrusion par un canal d'alimentation 11, en communication avec le chargeur C₁, tandis que la matière M₂ est acheminée par un canal d'alimentation 21, en communication avec le chargeur C₂. Les flux de chacune des deux matières se rencontrent dans une chambre de coextrusion E en forme de cylindre annulaire. Cette chambre est portée à la température de fusion des matières M₁ et M₂ et permet d'extruder en continu un cylindre P creux, d'axe de symétrie A (axe de la chambre E), des deux matières, appelé «paraison». Au sortir de la chambre, le cylindre P (ou paraison) est coupé et introduit ensuite dans un moule à température ambiante dans lequel le fond 2 du récipient 1 (figures 1 à 13) est soudé et dans lequel la paraison est soufflée, selon l'axe A, pour donner la forme finale au flacon.

Selon l'invention, la tête de coextrusion T comporte une tête de coextrusion secondaire T₁₂ pourvue de la sortie secondaire S₂ et montée mobile en rotation r et/ou en translation t, par rapport à une tête primaire T₁₁ comportant la sortie primaire S₁. Généralement, la tête secondaire T₁₂ tourne autour de la tête primaire, selon l'axe d'extrusion A (comme indiqué par la flèche circulaire r sur la figure 14).

Selon la décoration envisagée sur le flacon, on se sert uniquement de la mobilité rotative ou uniquement de la mobilité en translation de la tête secondaire. Il est possible également de combiner ces deux types de mouvements t et r. La tête d'extrusion T de l'invention permet d'obtenir tout type de décoration.

Selon l'invention, les sorties primaire S₁ et secondaire S₂ sont équipées, avantageusement, d'un dispositif d'ouverture et/ou de fermeture (matérialisé sur le dessin par «X»), que l'on actionne à volonté pendant la coextrusion de la paraison P. Ce dispositif est par exemple un anneau coulissant pouvant obturer la sortie S₁ ou S₂.

Comme visible à la figure 14, la matière M₁ à l'état fondu, est poussée par le premier chargeur à vis C₁, dans le canal d'alimentation 11, puis dans une chambre primaire annulaire 12 de la tête primaire T_{11,} en communication avec et surmontant la chambre de coextrusion E. Cette dernière est définie par le volume 13 entre un noyau cylindrique 34 d'axe A et une paroi primaire cylindrique 36 concentrique au noyau 34. La chambre 12 permet une répartition homogène de la matière M₁ dans la chambre E. La chambre 12 est définie par la partie supérieure de la paroi 36 et par une base 31 supportant le noyau 34.

La paroi primaire cylindrique 36 de la chambre de coextrusion est entourée de la tête d'extrusion secondaire T₁₂, mobile en translation et/ou en rotation, par rapport à la paroi primaire 36 qui est fixe. Cette tête d'extrusion secondaire est formée par une paroi cylindrique extérieure 41 raccordée à un fond 42, en forme de rondelle, muni d'un orifice de sortie 43 par lequel la paraison P peut quitter la tête d'extrusion T. La paroi extérieure 41 et le fond 42 définissent avec la base 31 et la paroi primaire 36, une chambre secondaire annulaire 23 contenant, à l'état fondu, le matériau M₂. La base 31 est cylindrique et entourée par l'extrémité supérieure de la paroi extérieure 41 libre en rotation. Elle est traversée de part en part par les canaux 11 et 21. Dans la partie intérieure du fond 42, au voisinage de l'orifice de sortie 43, on observe une invagination cylindrique 44 de même diamètre que la paroi primaire 36. La chambre secondaire 23 est alimenté en matériau M₂ par le canal 21. Entre la paroi primaire 36 et l'invagination 44, un interstice annulaire est formé constituant la sortie secondaire S₂ pour le matériau M₂. Un dispositif d'ouverture et de fermeture, permet d'ouvrir et fermer à volonté la sortie secondaire S₂.

Le fonctionnement de cette tête de coextrusion T ressort directement des explications qui précèdent : Au départ, les sorties primaire S₁ et secondaire S₂ sont fermées, tandis que la chambre secondaire 23 est rempli de matière M₂ en fusion. En ouvrant la sortie S₁, la matière M₁ occupe successivement la chambre primaire 12 et le volume cylindrique 13. Progressivement, la paraison P, entièrement en matière M₁ commence à sortir de l'orifice annulaire 43. Pendant cette étape d'extrusion, on ouvre la sortie secondaire annulaire S₂, pendant une durée déterminée. Sous la poussée du second chargeur C₂, la matière M₂, de couleur différente de celle de la matière M₁, pénètre dans le volume 13, de sorte qu'une bande colorée 4, 4' est formée sur la paraison P.

Ainsi, pour la réalisation du récipient R₁, une paraison a été extrudée dont la partie basse est composée exclusivement de matière M₁ en fermant la sortie S₂. Ensuite, l'ouverture de la sortie S₂ annulaire pendant une durée déterminée, provoque la formation d'une bande horizontale 4 colorée ; la fermeture de la sortie S₂ arrête l'écoulement de la matière M₂, de sorte que la partie haute de la paraison est exclusivement constitué de la matière M₁. Après soufflage de cette paraison, on obtient le récipient R₁ conforme à la figure 1.

Pour la réalisation du récipient R₂, une paraison a été extrudée dont toute la partie haute est constituée de matériau M₂. A cet effet, lors de l'extrusion de le paraison, les sorties primaire S₁ et secondaire S₂ sont ouvertes dès le départ. Au moment voulu, la sortie secondaire est fermée. Après soufflage de cette paraison, on obtient le récipient R₂ conforme à la figure 2.

Pour réaliser le récipient R₃, conforme à la figure 3, on procède de façon analogue à la réalisation du récipient R₁, l'opération d'ouverture et de fermeture étant répétée plusieurs fois, les intervalles entre ouverture et fermeture étant égaux.

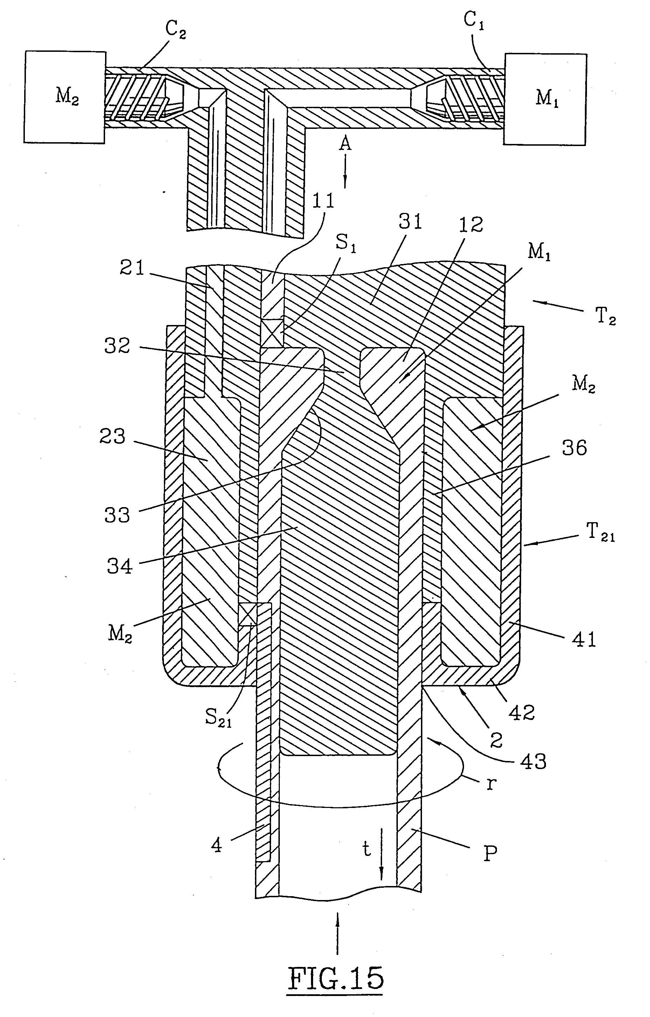

La figure 15 montre un autre mode de réalisation d'une tête de coextrusion T₂, conforme à l'invention, semblable à celle de la figure 14, seule la forme de la sortie secondaire S₂₁ étant différente. Elle n'est pas annulaire comme dans la réalisation de la figure 14, mais limitée à au moins une étendue sectorielle déterminée. Avantageusement, la section de cette sortie secondaire partielle S₂₁ a la forme d'un carrée. Cette sortie peut être une sortie multiple constituée par plusieurs orifices, par exemple, au nombre de 2 à 6.

A l'aide de la tête de coextrusion T₂ conforme à la réalisation de la figure 15, munie d'une seule sortie secondaire partielle S₂₁, on réalise la paraison du récipient R₄, en extrudant d'abord, pendant une durée déterminée, seul la matière M₁, la sortie secondaire S₂₁ étant fermée. Ensuite, on ferme la sortie primaire S₁ ; on ouvre et on ferme à une fréquence régulière la sortie secondaire S₂₁ et on fait tourner simultanément la tête secondaire T₂₁ de 360° autour de son axe A, dans le sens de la flèche r. Puis, on ferme la sortie secondaire S₁₂ et on ouvre la sortie primaire S₁ pendant une durée déterminée. Ensuite, on répète cette opération autant de fois qu'on le souhaite pour réaliser des bandes perpendiculaires à l'axe A, discontinues sur la paraison.

Pour la réalisation du récipient R₅, on procède comme dans l'exemple précédent, si ce n'est qu'on ouvre la sortie secondaire partielle S₂₁ une seule fois pendant une courte durée, pendant un tour de rotation de 360° de la tête d'extrusion secondaire T₂₁.

Le récipient R₆ est réalisé à partir d'une paraison obtenue de la façon suivante : On utilise une tête de coextrusion munie de trois sorties secondaires S₂₁ partielles, espacées angulairement de 120°. Lors de la coextrusion de cette paraison, les sorties primaire S₁ et secondaires S₂₁ sont ouvertes dés le départ. Simultanément on met en rotation la tête secondaire T₂₁, et on la déplace en même temps en translation, dans le sens de la flèche t.

Le récipient R₇ est réalisé à partir d'une paraison obtenue en utilisant une tête secondaire T₂₁ munie d'une seule sortie S₂₁ partielle et en opérant comme indiqué dans l'exemple précédent.

Le récipient R₈ est obtenu à partir d'une paraison réalisée en opérant de façon analogue à la réalisation du récipient R₆, les sorties secondaires S₂₁ étant ouvertes et fermées de façon décalée dans le temps, suivant une position de rotation déterminée de la tête secondaire T₁₂.

Le récipient R₉ est obtenu à partir d'une paraison réalisée en utilisant une tête secondaire T₁₂ muni d'une sortie secondaire S₂₁ à deux orifices diamétralement opposés, et en opérant de façon analogue à la réalisation du récipient R₆, les sorties secondaires S₂₁ étant ouvertes et fermées de façon synchronisée dans le temps, suivant une position de rotation déterminée de la tête secondaire T₂₁.

Le récipient R₁₀ est obtenu à partir d'une paraison P réalisée en utilisant une tête secondaire T₁₂ muni d'une sortie secondaire S₂₁ à orifice unique, et en opérant de façon analogue à la réalisation du récipient R₇.

La paraison utilisée pour le soufflage du récipient R₁₁ est obtenue en utilisant une tête secondaire T₂₁ muni d'une sortie secondaire, ouverte dès le départ de la coextrusion. Au moment voulu, on fait exécuter à la tête secondaire T₂₁ un mouvement angulaire déterminé rapide dans le sens de la flèche r, puis on arrête ce mouvement pendant une durée déterminée ; ensuite on fait exécuter à la tête secondaire T₂₁ un mouvement angulaire déterminé rapide, dans le contresens de la flèche r, et on arrête ce mouvement de rotation de nouveau, jusqu'à l'extrusion totale de la paraison.

La paraison utilisée pour le soufflage du récipient R₁₂ est obtenue en utilisant une tête secondaire T₂₁ muni d'une sortie secondaire S₂₁ à quatre orifices, espacées angulairement de 90°, les uns des autres. Les sorties primaire S₁ et secondaires S₂₁ sont ouvertes dès le départ. On fait tourner lentement la tête secondaire T₂₁ dans le sens de la flèche r d'une valeur angulaire faible, puis on arrête le mouvement de rotation pendant une courte durée de temps. Ensuite on recommence cette opération autant de fois qu'on souhaite d'ondulations sur la bande 4, jusqu'à l'extrusion totale de la paraison.

La paraison utilisée pour le soufflage du récipient R₁₃ est obtenue en utilisant une tête secondaire T₂₁ muni d'une sortie secondaire S₂₁ ouverte dès le départ de l'extrusion. On fait exécuter à la tête secondaire T₂₁ un mouvement angulaire lent de va-et-vient, de l'amplitude d'ondulation souhaitée, jusqu'à l'extrusion totale de la paraison.

Les récipients R₁ à R₁₃ comportent une décoration d'une grande précision et d'une grande netteté, de forme bien définie et d'un esthétique remarquable.

## Revendications

1. Procédé de fabrication d'un récipient coextrudé en au moins une première et seconde matières thermoplastiques (M₁, M₂) ayant des caractéristiques différentes, consistant :
- à utiliser une machine à coextruder équipée d'au moins deux chargeurs à vis et d'une tête de coextrusion (T) ayant une sortie primaire (S₁) et au moins une sortie secondaire (S₂, S₂₁), pour coextruder à chaud une paraison (P) creuse formée dans une chambre de coextrusion (12) cylindrique creuse munie d'un axe longitudinal ayant une extrémité annulaire ouverte (43), destinée à la sortie de la paraison de la tête d'extrusion (T), la sortie primaire (S₁) alimentant en la première matière (M₁) le côté de la chambre de coextrusion (12), opposé à l'extrémité annulaire ouverte (43), et la sortie secondaire (S₂, S₂₁) alimentant en la seconde matière (M₂) la chambre de coextrusion (12) à un niveau situé entre l'extrémité annulaire ouverte (43) de la chambre de coextrusion et son côté, et selon une direction angulaire par rapport à l'axe de la chambre,
*caractérisé en ce qu'il consiste, en outre,*
- à faire subir à la sortie secondaire (S₂, S₂₁), pendant au moins une partie de la coextrusion de la paraison, une translation et/ou une rotation par rapport à la sortie primaire (S₁), tout en modulant l'ouverture et/ou la fermeture de l'une des deux sorties (S₁, S₂), de sorte à former sur la paraison au moins une bande (4) en l'une des première et/ou seconde matières,
- à transférer la paraison (P), encore chaude, dans un moule, et,
- à souffler la paraison pour obtenir la forme finale du récipient pourvu d'au moins une bande constituée de l'une des deux matières.

2. Procédé selon la revendication 1, caractérisé en ce qu'on ferme et/ou on ouvre la sortie secondaire (S₂, S₂₁) à volonté, au moins partiellement, durant la coextrusion de la paraison (P).

3. Machine à coextruder équipée d'au moins deux chargeurs à vis pour le chargement en au moins une première et seconde matières thermoplastiques (M₁, M₂), munie d'une tête de coextrusion (T), comportant une sortie primaire (S₁), au moins une sortie secondaire (S₂, S₂₁) et une chambre de coextrusion (12) cylindrique creuse munie d'un axe longitudinal ayant une extrémité annulaire ouverte (43), la sortie primaire (S₁) alimentant en la première matière (M₁) le côté de la chambre de coextrusion (12), opposé à l'extrémité annulaire ouverte (43), et la sortie secondaire (S₂, S₂₁) alimentant en la seconde matière (M₂) la chambre de coextrusion (12) à un niveau situé entre l'extrémité annulaire ouverte (43) de la chambre de coextrusion et son côté, et selon une direction angulaire par rapport à l'axe de la chambre, caractérisée en ce que la tête de coextrusion (T) comporte une tête secondaire mobile (T₁₂, T₂₁) munie de la sortie secondaire (S₂, S₂₁), apte à faire exécuter à la sortie secondaire (S₂, S₂₁) une translation et/ou une rotation par rapport à la sortie primaire (S₁).

4. Machine selon la revendication 3, caractérisée en ce que la sortie secondaire (S₂₁) est formée d'au moins un secteur angulaire.

5. Machine selon l'une des revendications 3 ou 4, caractérisée en ce que la sortie secondaire (S₂) est annulaire.

6. Machine selon l'une des revendications 3 à 5, caractérisée en ce que les sortie primaire (S₁) et/ou secondaire (S₂, S₂₁) sont munies d'un dispositif d'ouverture et/ou de fermeture.

7. Machine selon l'une des revendications 3 à 5, caractérisée en ce que la sortie secondaire (S₂, S₂₁) est munie d'un dispositif d'ouverture et/ou de fermeture.

8. Rècipient (R) susceptible d'être obtenu par le procédé de coextrusion-soufflage selon la revendication 1, ayant un axe de soufflage longitudinal (A) orienté selon une première direction, comprenant un corps (1) muni d'un fond fermé (2) et d'un goulot (3), constitué de deux matières thermoplastiques (M₁, M₂) coextrudées de caractéristiques différentes, comprenant au moins une bande (4) formée d'au moins une des deux matières (M₁, M₂), caractérisé en ce que cette bande (4) est située dans un plan formant avec l'axe (A) un angle supérieur à 30°.

9. Récipient (R) susceptible d'être obtenu par le procédé de coextrusion-soufflage selon la revendication 1, ayant un axe de soufflage longitudinal (A) orienté selon une première direction, comprenant un corps (1) muni d'un fond fermé (2) et d'un goulot (3), constitué de deux matières thermoplastiques (M₁, M₂) coextrudés de caractéristiques différentes, comprenant au moins une bande (4) formée d'au moins une des deux matières (M₁, M₂), caractérisé en ce que cette bande (4), sur le corps (1) du récipient (R), est constituée d'au moins deux segments d'orientation différente.

10. Récipient selon la revendication 8 ou 9, caractérisé en ce que la bande (4) est discontinue.

11. Récipient selon l'une des revendications 8 à 10, caractérisé en ce que la bande (4) est en forme de spirale.

12. Récipient selon l'une des revendications 8 à 11, caractérisé en ce qu'il comporte plusieurs bandes (4).

13. Récipient selon la revendication 12, caractérisé en ce que les bandes (4) sont équidistantes.

14. Récipient selon l'une des revendications 8 à 13, caractérisé en ce que la bande (4) est réalisée des deux matières (M₁ , M₂) superposées.

15. Récipient selon l'une des revendications 8 à 14, caractérisé en ce que la première matière (M₁) a une couleur différente de la couleur de la deuxième matière (M₂).

16. Récipient selon l'une des revendications 8 à 15, caractérisé en ce que la première (M₁) ou la deuxième matière (M₂) est transparente.

## Claims

1. A method for manufacturing a container coextruded in at least a first and second thermoplastic material (M₁, M₂) having different characteristics, lying in :
- using a coextruder machine provided with at least two screw feeders and a coextrusion head (T) having a primary outlet (S₁) and at least one secondary outlet (S₂, S₂₁), for the hot coextrusion of a hollow parison (P) formed in a hollow cylindrical coextrusion chamber (12) provided with a longitudinal axis, having an open annular end (43) intended for the delivery of the parison from the extrusion head (T), the primary outlet (S₁) feeding the side of the coextrusion chamber (12) on the opposite side to the open annular end (43) with a first material (M₁), and the secondary outlet (S₂, S₂₁) feeding the coextrusion chamber (12) with a second material (M₂) in a region situated between the open annular end (43) of the coextrusion chamber and its side and along an angular direction relative to the axis of the chamber,
*characterized in that it lies, moreover, in*
- subjecting the secondary outlet (S₂, S₂₁) for at least a part of the coextrusion of the parison to a translation and/or a rotation relative to the primary outlet (S₁), while modifying the opening and/or closing of one of the two outlets (S₁, S₂), so as to form on the parson at least one stripe (4) in one of the first and/or second materials,
- transferring the parison (P), while still hot, into a mould, and
- blow moulding the parson so as to obtain the final shape of the container provided with at least one stripe formed by one of the two materials.

2. A method according to claim 1, characterized in that the secondary outlet (S₂, S₂₁) is closed and/or opened at will, at least partly, during the coextrusion of the parison (P).

3. A coextruder machine prodded with at least two screw feeders for the feeding of at least a first and second thermoplastic material (M₁, M₂), provided with a coextrusion head (T), comprising a primary outlet (S₁), at least one secondary outlet (S₂, S₂₁) and a hollow cylindrical coextrusion chamber (12) provided with a longitudinal axis, having an open annular end (43), the primary outlet (S₁) feeding the side of the coextrusion chamber (12) on the opposite side to the open annular outlet (43) with a first material (M₁), and the secondary outlet (S₂, S₂₁) feeding the coextrusion chamber (12) with the second material (M₂) in a region situated between the open annular end (43) of the coextrusion chamber and its side, and along an angular direction relative to the axis of the chamber, characterized in that the coextrusion head (T) has a movable secondary bead (T₁₂,T₂₁) provided with the secondary outlet (S₂, S₂₁,) capable of causing the secondary outlet (S₂, S₂₁) to execute a translation an/or a rotation relative to the primary outlet (S₁).

4. A machine according to claim 1, characterized in that the secondary outlet (S₂₁) is formed by at least one angular sector.

5. A machine according to one of claims 3 or 4, characterized in that the secondary outlet (S₂) is annular.

6. A machine according to one of claims 3 to 5, characterized in that the primary outlet (S₁) and/or the secondary outlet (S₂, S₂₁) are provided with an opening and/or closing device.

7. A machine according to one of claims 3 to 5, characterized in that the secondary outlet (S₂, S₂₁) is provided with an opening and/or closing device.

8. A container (R) capable of being obtained by the coextrusion-blow moulding method according to claim 1, having a longitudinal blow moulding axis (A) orientated along a first direction, comprising a body (1) provided with a closed bottom (2) and a neck (3) formed of two coextruded thermoplastic materials (M₁, M₂) with different characteristics, comprising at least one stripe (4) formed by at least one of two materials (M₁, M₂), characterized in that this stripe (4) is situated in a plane forming an angle greater than 30° with the is (A).

9. A container (R) capable of being obtained by the coextrusion-blow moulding method according to claim 1, having a longitudinal blow moulding axis (A) orientated along a first direction, comprising a body (1) provided with a closed bottom (2) and a neck (3) formed of two coextruded thermoplastic materials (M₁, M₂) with different characteristics, comprising at least one stripe (4) formed by at least one of two materials (M₁, M₂), characterized in that this stripe (4) on the body (1) of the container (R) is constituted by at least two segments with different orientations.

10. A container according to claim 8 or 9, characterized in that the stripe (4) is discontinuous.

11. A container according to one of claims 8 to 10, characterized in that the stripe (4) is formed in a helical shape.

12. A container according to one of claims 8 to 11, characterized in that it has several stripes (4).

13. A container according to claim 12, characterized in that the stripes (4) are equidistant.

14. A container according to one of claims 8 to 13, characterized in that the stripe (4) is obtained from two superposed materials (M₁, M₂).

15. A container according to one of claims 8 to 14, characterized in that the first material (M₁) has a colour different from the colour of the second material (M₂).

16. A container according to one of claims 8 to 15, characterized in that the first material (M₁) or the second material (M₂) is transparent.

## Patentansprüche

1. Verfahren zur Herstellung eines Behälters, der aus mindestens einem ersten und zweiten thermoplastischen Material (M₁, M₂) koextrudiert wird, die unterschiedliche Merkmale aufweisen, das darin besteht, daß
- man eine Koextrusionsvorrichtung benutzt, die mit mindestens zwei Schneckenförderen und einem Koextrusionskopf (T) ausgestattet ist, der einen Primärauslaß (S₁) und mindestens einen Sekundärauslaß (S₂, S₂₁) aufweist, um einen hohlen Rohling (P) warm zu extrudieren, der in einer hohlen, zylindrischen Koextrusionskammer (12) gebildet wird, die mit einer Längsachse versehen ist und ein offenes, ringförmiges Ende (43) aufweist, das für den Austritt des Rohlings aus dem Extrusionskopf (T) bestimmt ist, wobei der Primärauslaß (S₁) mit dem ersten Material (M₁) die Seite der Koextrusionskammer (12) beschickt, die dem offenen, ringförmigen Ende (43) entgegengesetzt ist, und der Sekundärauslaß (S₂, S₂₁) die Koextrusionskammer (12) mit dem zweiten Material (M₂) auf einer Höhe beschickt, die zwischen dem offenen, ringförmigen Ende (43) der Koextrusionskammer und ihrer Seite gelegen ist, sowie gemäß einer Winkelrichtung in Bezug auf die Achse der Kammer,
dadurch gekennzeichnet, daß es außerdem darin besteht, daß
- man den Sekundärauslaß (S₂, S₂₁) während mindestens eines Abschnitts der Koextrusion des Rohlings einer Translations- und/oder Rotationsbewegung in Bezug auf den Primärauslaß (S₁) unterzieht, während man das Öffnen und/oder Schließen eines der beiden Auslässe (S₁, S₂) derartig moduliert, daß man auf dem Rohling mindestens ein Band (4) aus dem ersten und/oder zweiten Material bildet,
- man den Rohling (P) noch warm in eine Form überbringt, und
- man den Rohling aufbläst, um die endgültige Form des Behälters zu erzielen, der mindestens mit einem Band versehen ist, das aus dem einen der beiden Materialien gebildet ist.

2. Verfahren nach Anspruch 1, dadurch gekennzeichnet, daß man den Sekundärauslaß (S₂, S₂₁) nach Gutdünken mindestens teilweise während der Koextrusion des Rohlings (P) schließt und/oder öffnet.

3. Koextrusionsvorrichtung, die mit mindestens zwei Schneckenförderern für die Aufgabe mindestens eines ersten und eines zweiten, thermoplastischen Materials (M₁, M₂) ausgestattet ist, mit einem Koextrusionskopf (T), der einen Primärauslaß (S₁), mindestens einen Sekundärauslaß (S₂, S₂₁) und eine hohle, zylindrische Koextrusionskammer (12) aufweist, die mit einer Längsachse versehen ist und ein offenes, ringförmiges Ende (43) aufweist, wobei der Primärauslaß (S₁) mit dem ersten Material (M₁) die Seite der Koextrusionskammer (12) beschickt, die dem offenen, ringförmigen Ende (43) entgegengesetzt ist, und der Sekundärauslaß (S₂, S₂₁) mit dem zweiten Material (M₂) die Koextrusionskammer (12) auf einer Höhe beschickt, die zwischen dem ringförmigen, offenen Ende (43) der Koextrusionskammer und ihrer Seite gelegen ist, sowie längs einer abgewinkelten Richtung in Bezug auf die Achse der Kammer, dadurch gekennzeichnet, daß der Koextrusionskopf (T) einen beweglichen Sekundärkopf (T₁₂, T₂₁) aufweist, der mit dem Sekundärauslaß (S₂, S₂₁) ausgestattet und dazu eingerichtet ist, den Sekundärauslaß (S₂, S₂₁) eine Translations- und/oder Rotationsbewegung in Bezug auf den Primärauslaß (S₁) durchführen zu lassen.

4. Vorrichtung nach Anspruch 3, dadurch gekennzeichnet, daß der Sekundärauslaß (S₂₁) mit mindestens einem winkeligen Sektor ausgebildet ist.

5. Vorrichtung nach einem der Ansprüche 3 oder 4, dadurch gekennzeichnet, daß der Sekundärauslaß (S₂) ringförmig ist.

6. Vorrichtung nach einem der Ansprüche 3 bis 5, dadurch gekennzeichnet, daß der Primärauslaß (S₁) und/oder Sekundärauslaß (S₂, S₂₁) mit einer Öffnungs- und/oder Schließvorrichtung versehen ist.

7. Vorrichtung nach einem der Ansprüche 3 bis 5, dadurch gekennzeichnet, daß der Sekundärauslaß (S₂, S₂₁) mit einer Öffnungs- und/oder Schließvorrichtung versehen ist.

8. Behälter (R) der durch das Koextrusions-Formblas-Verfahren nach Anspruch 1 erzielbar ist, der eine Längs-Blasachse (A) aufweist, die längs einer ersten Richtung ausgerichtet ist, mit einem Körper (1), der mit einem geschlossenen Boden (2) und einem Hals (3) versehen ist, aus zwei koextrudierten, thermoplastischen Materialien (M₁, M₂) mit unterschiedlichen Eigenschaften, und mit mindestens einem Band (4), das aus mindestens einem der beiden Materialien (M₁, M₂) gebildet ist, dadurch gekennzeichnet, daß dieses Band (4) in einer Ebene gelegen ist, die zusammen mit der Achse (A) einen Winkel bildet, der größer ist als 30°.

9. Behälter (R), der durch das Koextrusions-Formblas-Verfahren nach Anspruch 1 erzielbar ist, der eine Längs-Blasachse (A) aufweist, die längs einer ersten Richtung ausgerichtet ist, mit einem Körper (1), der mit einem geschlossenen Boden (2) und einem Hals (3) versehen ist, aus zwei koextrudierten, thermoplastischen Materialien (M₁, M₂) mit unterschiedlichen Eigenschaften, und mit mindestens einem Band (4), das aus mindestens einem der beiden Materialien (M₁, M₂) gebildet ist, dadurch gekennzeichnet, daß dieses Band (4) auf dem Körper (1) des Behälters (R) aus mindestens zwei Segmenten mit unterschiedlicher Ausrichtung gebildet ist.

10. Behälter nach Anspruch 8 oder 9, dadurch gekennzeichnet, daß das Band (4) nicht-durchgehend ist.

11. Behälter nach einem der Ansprüche 8 bis 10, dadurch gekennzeichnet, daß das Band (4) in Form einer Spirale vorliegt,

12. Behälter nach einem der Ansprüche 8 bis 11, dadurch gekennzeichnet, daß er mehrere Bänder (4) aufweist.

13. Behälter nach Anspruch 12, dadurch gekennzeichnet, daß die Bänder (4) gleichen Abstand aufweisten.

14. Behälter nach einem der Ansprüche 8 bis 13, dadurch gekennzeichnet, daß das Band (4) aus zwei übereinanderliegenden Materialien (M₁, M₂) gebildet ist.

15. Behälter nach einem der Ansprüche 8 bis 14, dadurch gekennzeichnet, daß das erste Material (M₁) eine Farbe aufweist, die sich von der Farbe des zweiten Materials (M₂) unterscheidet.

16. Behälter nach einem der Ansprüche 8 bis 15, dadurch gekennzeichnet, daß das erste Material (M₁) oder das zweite Material (M₂) transparent ist.
